# EUROPEAN PATENT SPECIFICATION

(11) **EP 2 995 197 B1**
(45) Date of publication and mention of the grant of the patent: **25.10.2017**
(21) Application number: 15185085.6
(22) Date of filing: 14.09.2015
(51) Int. Cl.: A01K 31/12, A01K 39/01, A01K 39/012

(54) **FINCH BIRD FEEDER WITH ADJUSTABLE PORT ACCESS**
VOGELFUTTERSPENDER MIT EINSTELLBAREM TÜRZUGANG
MANGEOIRE POUR OISEAUX AVEC ORIFICE D'ACCÈS RÉGLABLE

(30) Priority: 12.09.2014 US 201414485141
(43) Date of publication of application: 16.03.2016
(73) Proprietor: WOODSTREAM CORPORATION, Lititz, PA 17543 (US)
(72) Inventor: VAUGHN, Jr, William Ray, Lititz, PA 17543 (US); HOYSAK, Judith Kim, Lancaster, PA 17603 (US)
(74) Representative: Cawley, Aimee Elizabeth

(56) References cited:
- US-A- 4 996 947
- US-A1- 2013 255 582
- US-A1- 2014 076 239
- US-A1- 2014 150 725

## Description

### FIELD OF THE INVENTION

The present invention generally relates to bird feeders for attracting and feeding wild birds, especially finches. More particularly, the present invention is directed to bird feeders configured to provide adjustable access to feed ports.

### BACKGROUND OF THE INVENTION

Persons have long used bird feeders, birdbaths, and the like to attract birds of various types to their homes, both to view the birds and to feed the birds out of concern for their welfare in the event that food is scarce, as in winter. Different types of feeders have been developed, which each dispense foodstuffs that are preferred by a selected variety of bird that a person might desire to attract. For example, seeds, grains, suets, and nectars are common foodstuffs that can be dispensed by a selected type of feeder.

Seed dispensing birdfeeders are perhaps the easiest and most popular way of attracting a myriad of wild birds to a particular location for viewing. This is especially so in the winter months when food is scarce. Typically, seed feeders are suspended from or supported by a pole or post or hung from a tree branch so as to elevate the feeder above the ground and are built to hold and protect the seed from the elements.

There are a variety of seed feeders that have been constructed to attract various species of wild birds. One popular type is the tube feeder. Tube feeders are hollow, cylindrical tubes, often made of plastic, and have multiple feeding stations spaced along the length of the tube. Typically, feeding stations include a feed port and an adjacent perch, such as a radially extending post, positioned below the feed port to provide the feeding bird with a place to alight and then obtain seed through the port while the bird stands on the perch. Feeders intended for gold finches, however, who like to feed while in an upside down position, are made with the perch positioned above the feed port. Other birds such as nuthatches, and some varieties of woodpeckers, also like to eat upside down and will do so if a suitable bird supporting structure is available to them.

Thistle seed is attractive to finches and can be effectively dispensed with a tube feeder having a plurality of feeding stations. However, thistle seed is also attractive to other birds as well. Since thistle seed is one of the more expensive seeds on the market, when a consumer wants to attract gold finches using thistle seed it would be advantageous if other birds could be prevented from also consuming the seed. At other times, however, the consumer may want to use the feeder to dispense other types of seeds without concern for the type of birds that are able to feed. Accordingly, it would be advantageous to the consumer to have a feeder with an adjustable feed port assembly that can be configured to allow birds to feed in either an upright position or an upside-down position.

US 2013/0255582 discloses a bird feeder with different perch positions for feeding birds. The feeder comprises a reservoir for holding bird food and having an aperture in a wall thereof for providing access to the bird feed. A feeding station is mounted on the wall and includes a port through which a bird may access bird food in the reservoir and a perch from which the bird may access the port. The perch is connected to the port such that the perch may be rotated to a plurality of positions relative to the port to allow birds that feed from different positions to access the bird food.

### SUMMARY OF THE INVENTION

According to a first aspect of the present invention there is provided a bird feeder including a seed reservoir having a feed port therein through which birds can access seed held within the reservoir, a perch positioned adjacent the feed port and extending outwardly from the reservoir wall, and an adjustable port element rotatable with respect to the reservoir wall, wherein the perch is fixed with respect to the reservoir wall while said adjustable port element is configured to rotate between a first position in which the port element allows birds to access feed through a feed port only while hanging upside down from the fixed perch, and a second position in which the port element allows birds to access feed while standing in an upright position on the fixed perch.

In an embodiment, the bird feeder of the present invention includes at least an upper opening or feed port, a lower opening or feed port and a stationary perch that are arranged in generally vertical alignment with one another in the reservoir side wall. The stationary perch is positioned between and approximately equidistant from the upper and lower feed ports. An adjustable port element, sometimes referred to herein as a stem, has a first end by which the stem is rotatably mounted on the perch and a second end distal to the mounting end. The second end of the stem is configured to block access to either the upper feed port or the lower feed port by rotating the stem around the perch between a first upper feed port blocking position and a second lower feed port blocking position. The second end preferably has a locking member that is inserted into the feed port being blocked. When the stem is in the first upper feed port blocking position, birds access seed through the lower feed port by hanging upside down from the perch. Conversely, when the stem is in the second lower feed port blocking position, birds can access seed through the upper feed port while standing in an upright position on the same perch. Therefore, the consumer is free to adjust the configuration of the bird feeder for upside down or right side up feed port access according to which type or types of birds the consumer wants to attract to the feeder for feeding.

In view of the foregoing, it is an object of the present invention to provide a new and useful bird feeder having adjustable feed port access that enables the consumer to allow birds to feed in either an upright position or an upside down position.

Another object of the present invention is to provide a bird feeder in accordance with the preceding object that, by providing finches with two orientations for feeding, effectively makes the feeder a two-in-one finch feeder.

Still another object of the present invention is to provide an improved bird feeder in accordance with the preceding objects in which either the upright or the upside down feeding position is selected by adjustment of a member that is rotatable with respect to a reservoir side wall of the bird feeder.

Still another object of the present invention is to provide an improved bird feeder in accordance with the preceding objects in which the adjustable port element or stem has a first end mounted to a stationary perch and a second end distal to the mounting end, the second end being configured to block access to either an upper feed port positioned above the perch or a lower feed port positioned below the perch by rotating the stem around the perch between a first upper feed port blocking position in which birds access seed through the lower feed port by hanging upside down from the perch and a second lower feed port blocking position, in which birds can access seed through the upper feed port while standing in an upright position on the same perch.

A further object of the present invention is to provide the embodiment of an improved bird feeder in accordance with the preceding object in which the upper feed port, the perch and the lower feed port are in generally vertical alignment with one another with the perch being spaced between and approximately equidistant from the upper and lower feed ports.

A yet further object of the present invention is to provide the embodiment of an improved bird feeder in accordance with the preceding two objects in which the second end of the adjustable port element or stem has a blocking structure with a locking member that is inserted into a respective one of the upper and lower feed ports to secure the blocking structure over the feed port to prevent access thereto.

A still further object of the present invention is to provide an improved bird feeder in accordance with the preceding objects that is not complex in structure and which can be manufactured at low cost but yet efficiently enables the consumer to change the configuration of the feeder to best attract the type or types of birds desired.

A further aspect of the invention provides a bird feeder including a seed reservoir having a feed port therein through which birds can access seed held within the reservoir, a perch positioned adjacent the feed port and extending outwardly from the reservoir wall, and an adjustable port element rotatable with respect to the reservoir wall between a first position in which the port element allows birds to access feed through a feed port only while hanging upside down from the perch, and a second position in which the port element allows birds to access feed while standing in an upright position on the perch, wherein the adjustable port element includes a mounting end rotatable around said perch and a second end having a blocking structure that prevents access to a feed port positioned adjacent the blocking structure.

### BRIEF DESCRIPTION OF THE FIGURES

Figure 1 is a perspective view of an embodiment of an adjustable port bird feeder in accordance with the present invention in which some of the components of the feeder are shown in an exploded view.
Figure 1A is a perspective view of the reservoir of the adjustable port bird feeder shown in Figure 1.
Figure 1B is a first side view of the reservoir shown in Figure 1A.
Figure 1C is a second side view of the reservoir shown in Figures 1A and 1B with the reservoir rotated 90° with respect to the reservoir shown in Figure 1B.
Figure 1D is an enlarged view of Detail B as shown in Figure 1B.
Figure 2 is a perspective view of the elongated perch member of the adjustable port bird feeder shown in Figure 1.
Figure 2A is a side view of the elongated perch member shown in Figure 2.
Figure 2B is a bottom view of the elongated perch member shown in Figures 2 and 2A.
Figure 2C is a sectional view of the elongated perch member taken along line A-A shown in Figure 2B.
Figure 2D is a cross sectional view of the elongated perch member taken along line C-C shown in Figure 2B.
Figure 2E is an enlarged view of Detail B as shown in Figure 2B.
Figure 2F is a cross sectional view of the elongated perch member taken along line D-D shown in Figure 2E.
Figure 2G is an end view of the elongated perch member shown in Figures 2 and 2A-2C.
Figure 3 is a perspective view of the feeder base part of the adjustable port bird feeder shown in Figure 1.
Figure 3A is a bottom view of the feeder base part shown in Figure 3.
Figure 3B is a side view of the feeder base part shown in Figures 3 and 3A.
Figure 3C is a view of the feeder base part taken along line D-D shown in Figure 3B.
Figure 3D is a top view of the feeder base part shown in Figures 3 and 3A-3D.
Figure 3E is a sectional view of the feeder base part taken along line A-A shown in Figure 3D.
Figure 3F is an enlarged view of Detail B as shown in Figure 3E.
Figure 3G is an enlarged view of Detail C as shown in Figure 3E.
Figure 4 is a perspective view of the adjustable port element of the adjustable port bird feeder shown in Figure 1, showing the outer side of the adjustable port element which faces away from the reservoir when the feeder is assembled.
Figure 4A is a plan view of the outer side of the adjustable port element shown in Figure 4.
Figure 4B is a side view of the adjustable port element shown in Figures 4 and 4A.
Figure 4C is a plan view of the inner side of the adjustable port element shown in Figures 4, 4A and 4B, the inner side being that side of the adjustable port element facing toward the reservoir when the feeder is assembled.
Figure 4D is a perspective view of the inner side of the adjustable port element of the adjustable port bird feeder shown in Figure 1.
Figure 4E is an enlarged perspective view of Detail B as shown in Figure 4D.
Figure 4F is a sectional view of the locking member of the adjustable port element taken along line A-A shown in Figure 4C.
Figure 4G is a sectional view of the locking member of the adjustable port element taken along line B-B shown in Figure 12C.
Figure 4H is an enlarged view of Detail C shown in Figure 4C.
Figure 4I is a sectional view of the mounting end of the adjustable port element taken along line D-D shown in Figure 4C.

### DETAILED DESCRIPTION OF THE PREFERRED EMBODIMENTS

In describing preferred embodiments of the invention illustrated in the drawings, specific terminology will be resorted to for the sake of clarity. However, the invention is not intended to be limited to the specific terms so selected, and it is to be understood that each specific term includes all technical equivalents which operate in a similar manner to accomplish a similar purpose.

As used herein, "front" refers to the side of a component that faces outwardly from the bird feeder when the feed port assembly is assembled onto the reservoir. Conversely, "rear" refers to the opposite side, namely the side of the component that faces the interior of the reservoir of the bird feeder when assembled.

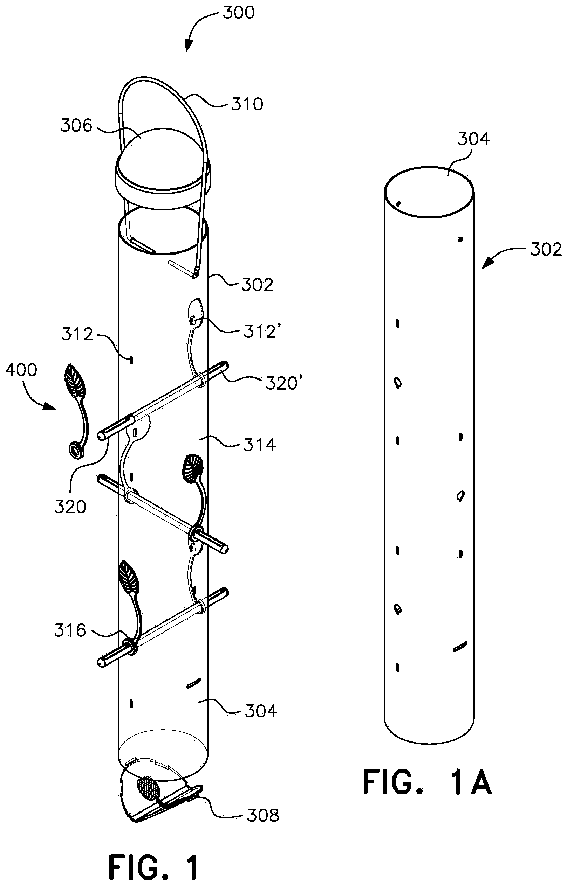

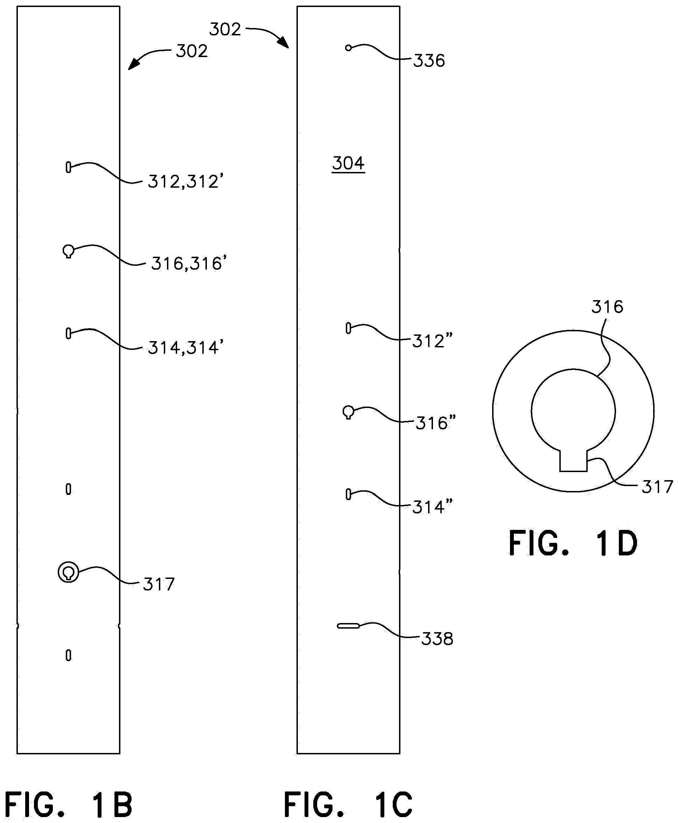

According to the embodiment illustrated in Figure 1, the present invention is directed to a bird feeder with adjustable port access, generally designated by reference numeral 300. The feeder 300 has a reservoir, generally designated by reference numeral 302, with a side wall 304 for holding seed, a lid 306 and a feeder base part 308. The feeder may also be provided with a hanger 310 enabling the feeder to be suspended from a supporting structure in a conventional manner.

As variously shown in Figures 1, 1A, 1B, 1C and 1D, the side wall 304 on a first side of the reservoir has at least one upper opening or feed port 312 and one lower opening or feed port 314 spaced from and in generally vertical alignment with one another that allow for seed access through the first side of the reservoir 302. The side wall 304 on a second side of the reservoir 302 opposite the first side is also provided with at least one upper feed port 312' and one lower feed port 314' spaced from and in generally vertical alignment with one another that allow for seed access through the second side of the reservoir 302. In the illustrated embodiment, the upper and lower feed ports 312, 314 on the first side of the reservoir are in generally horizontal alignment with the upper and lower feed ports 312', 314' on the second side, respectively. Offset by approximately 90° from feed ports 312, 312', 314, 314' and vertically spaced therefrom is another pair of upper and lower feed ports 312"", 314"" having the same relative arrangement with respect to one another as do feed ports 312, 314 and 312', 314' just described (see Figure 1C).

Positioned between and approximately equidistant from the upper and lower feed ports 312, 314 on the first side of the reservoir is a first perch mount aperture 316 formed in the reservoir side wall. A corresponding second perch mount aperture 316' is formed in the second side of the reservoir side wall between the upper and lower feed ports on the opposing side of the reservoir. The second perch mount aperture 316' is in substantially horizontal alignment with the first perch mount aperture 316. A third perch mount aperture 316"" is formed between the upper and lower feed ports 312"", 314"" as shown in Figure 1C. Located on the opposite side of the reservoir relative to the third perch mount aperture as well as its associated feed ports is a corresponding fourth perch mount aperture with associated feed ports which are not specifically identified with reference numerals but are shown in Figure 1.

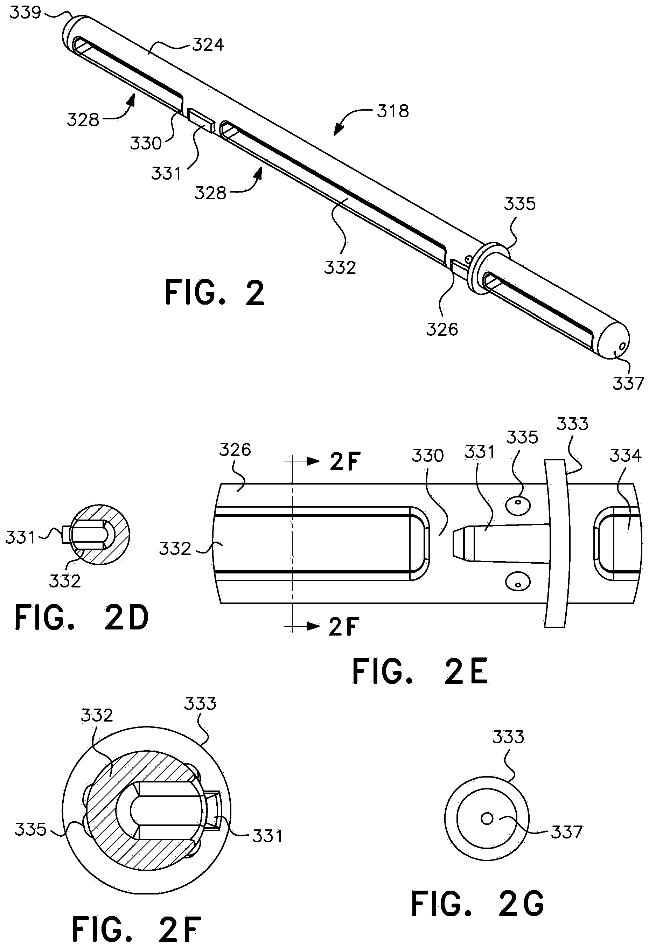

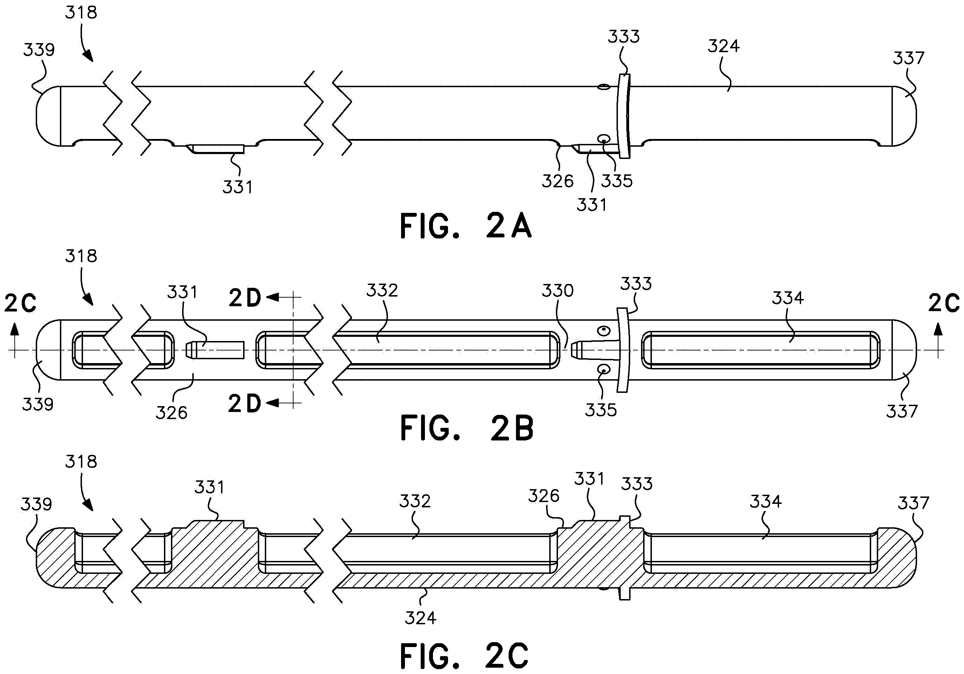

An elongated perch member, generally designated by reference numeral 318 and shown in detail in Figures 2, 2A and 2B, is received through the first and second perch mount apertures 316, 316' so as to span the inner diameter of the reservoir and extend outwardly from at least one side of the reservoir to form a perch 320 (see Figure 1). According to the illustrated embodiment, the perch mount apertures have a keyed part 317 to properly orient the elongated perch member. The elongated perch member 318 extends outwardly from the reservoir side wall preferably on both the first and second opposing sides of the reservoir so that the outwardly extending portions of the elongated perch member form two perches 320, 320', one on either side of the reservoir.

The outer surface of the elongated perch member 318 preferably has a generally rounded top 324 and a bottom 326 with a longitudinally extending channel, generally designated by reference numeral 328. As shown in Figures 2 and 2A-2F, the channel 328 is divided by two interruptions 330 along the length thereof that divide the channel 328 into a center channel part 332 and two shorter end channel parts 334. The channels are not necessary but facilitate manufacture when the perch member is made by injection molding.

The outer surface of the elongated perch member 318 is provided with a pair of keys 331, a flange 333 and a plurality of small protrusions 335 adjacent but longitudinally spaced from the flange 333. The keys 331 are sized and shaped to be received within the keyed part 317 of their respective perch mount apertures to mount the elongated perch member 318 in the proper orientation.

The flange 333 and protrusions 335 are used to secure the elongated perch member within a pair of opposing perch mount apertures 316 with a snap fit. The distance between the flange and a first end 337 of the elongated perch member 318 defines the length of the first perch that extends from one side of the reservoir when the feeder is assembled. As illustrated, the overall length of the member 318 is such that the second end 339 of the member 318 protruding on the opposite side of the reservoir to form the opposing perch is substantially equal in length to the first perch.

To mount the elongated perch member 318, the second end 339 of the elongated perch member 318 is inserted through a first perch mount aperture, across the interior of the reservoir and into the opposing second perch mount aperture, with the keys 331 being aligned with the keyed parts 317. By continuing to push the first end 337 toward the reservoir, the protrusions 335 will be compressed sufficiently to pass through the first perch mount aperture in the reservoir side wall and then snap back once inside the reservoir. The flange 333 prevents further inward movement while the protrusions 335, now on the opposite side of the reservoir side wall from the flange 333, provide sufficient resistance to prevent easy removal of the elongated perch member.

While in the illustrated embodiment the elongated perch member 318 is mounted in the first and second perch mount apertures 316, 316' to span the interior of the reservoir, it would be understood by persons of skill in the art that one or more perches of varying design could be mounted to the reservoir side wall in other ways other than that shown. For example, a perch may be constructed as part of a feed port assembly that is wholly supported by one side of the reservoir. The present invention is intended to include all bird feeder configurations according to the claims having an upper feed port, a lower feed port and a perch spaced from and in generally vertical alignment with the upper and lower feed ports to form a feeding station that provides birds with access to both the upper and lower feed ports from the same perch.

The association of the first upper feed port 312, the second lower feed port 314, and the perch 320 extending from the first perch mount aperture 316 form a feeding station. As shown in Figure 1, the bird feeder 300 is preferably provided with a plurality of feeding stations. The feeding stations are paired with one another as each elongated perch member forms two perches on opposing sides of the reservoir, each of which is part of a respective feeding station. The bird feeder illustrated in Figure 1 has six feeding stations, including two upper feeding stations, two middle feeding stations and two lower feeding stations respectively arranged as three feeding station pairs spaced from one another both around and longitudinally along the reservoir. The upper feed ports and the lower feed ports of the two middle feeding stations are positioned about 90° out from the feed ports of the upper and lower feeding stations. Greater or lesser numbers of feeding stations could, of course, be included. Further, while the vertical and spaced relationship of the first upper feed port, the second lower feed port and the perch should be maintained for each feeding station, the vertical and rotational relationship of the various feeding stations does not have to be as shown in Figure 1.

Near the top of the reservoir, two opposing sides of the reservoir side wall are each provided with a handle mounting aperture 336. The inwardly directed arms 311 of the handle 310 are received within the handle mounting apertures 336 to secure the handle to the reservoir. Near the lower end of the reservoir, two opposing sides of the reservoir side wall are each provided with a feeder base part mounting aperture 338. The feeder base part mounting apertures 338 enable the feeder base part to be secured to the reservoir side wall.

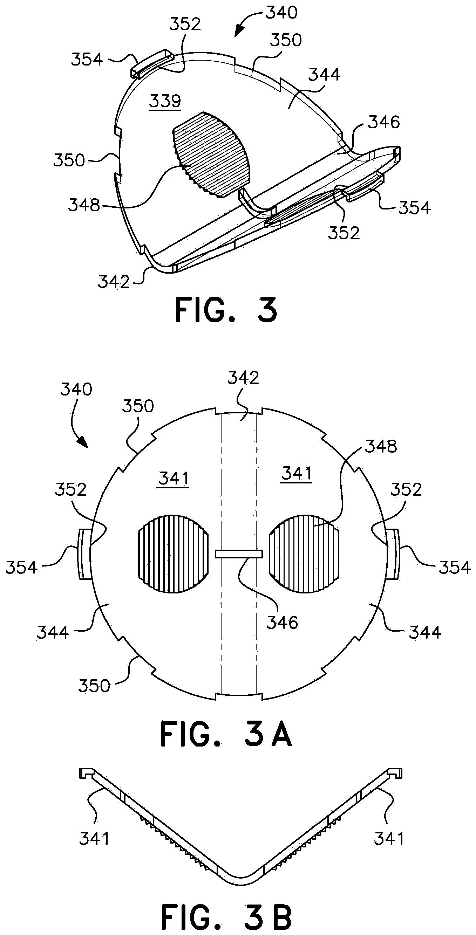

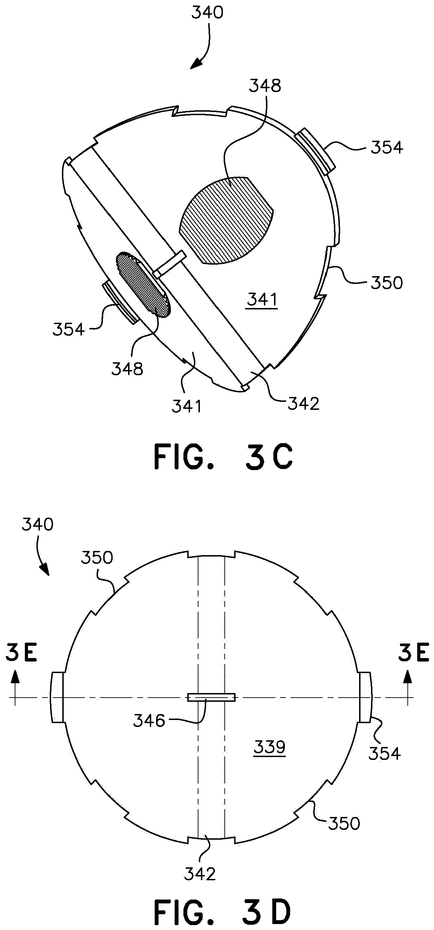

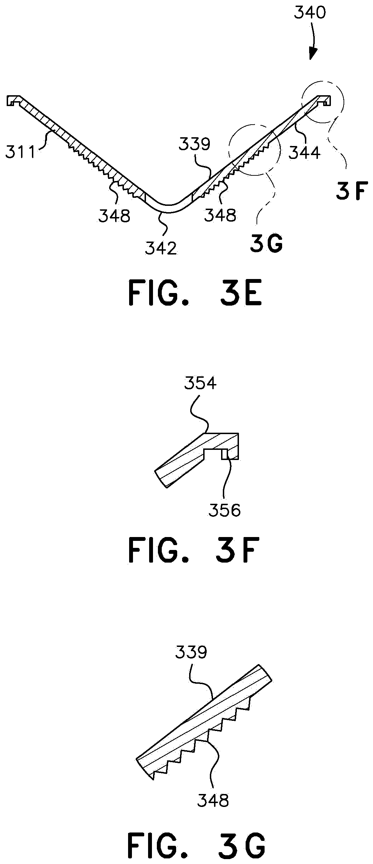

As shown in Figures 3 and 3A-E, the feeder base part 308 is embodied as a baffle, generally designated by reference numeral 340. The baffle 340 is generally circular and is divided along a center diameter by a fold 342. The fold 342 divides the baffle 340 into two semi-circular sides 344 that are joined at an angle of between about 90° and about 110°, with the longitudinal center of the fold 342 having an aperture 346 to provide drainage in the event that water is captured in the reservoir.

When mounted within the reservoir, the baffle is positioned with the angled sides 344 facing upwardly. The upper surface 339 is smooth while the lower surface 341 on each side 344 is provided with a textured area 348. As best shown in Figure 3G, the textured area 348 includes a plurality of ribs that provide a user's fingers with traction when gripping the baffle for mounting and removal. Other patterns of one or more raised elements on each side 344 could be used as would be understood by persons of skill in the art.

The baffle may preferably be made of acrylic, PVC, clear polystyrene or like material(s). The view shown in Figure 3 illustrates the baffle when made of a transparent material, the transparency allowing the textured area 348 to be seen from the upper surface 339. As would be understood, the baffle may alternatively be made of a non-transparent material.

Spaced around the outer perimeter of the baffle 340 are a plurality of cutouts 350. The cutouts allow for additional drainage in the event water enters the reservoir. The upper perimeter edge 352 on each side 344 is provided with a tab 354. As best seen in Figure 3F, the outer edge of the tab has a hook 356. To position the baffle inside the reservoir and secure the baffle to the reservoir side wall, the tabs 354 are inserted through the feeder base part mounting apertures 338 on opposing sides of the reservoir, with the hooks 356 engaging an outer surface of the reservoir side wall.

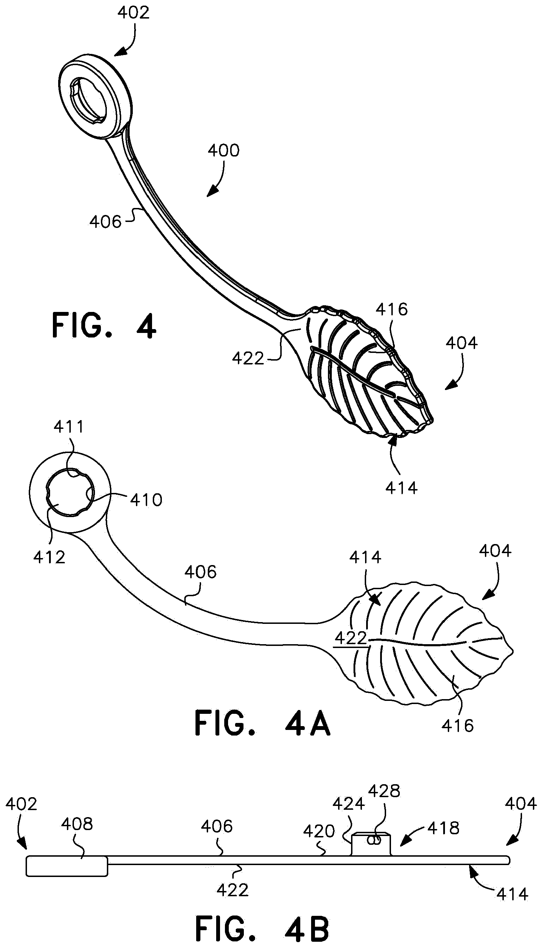

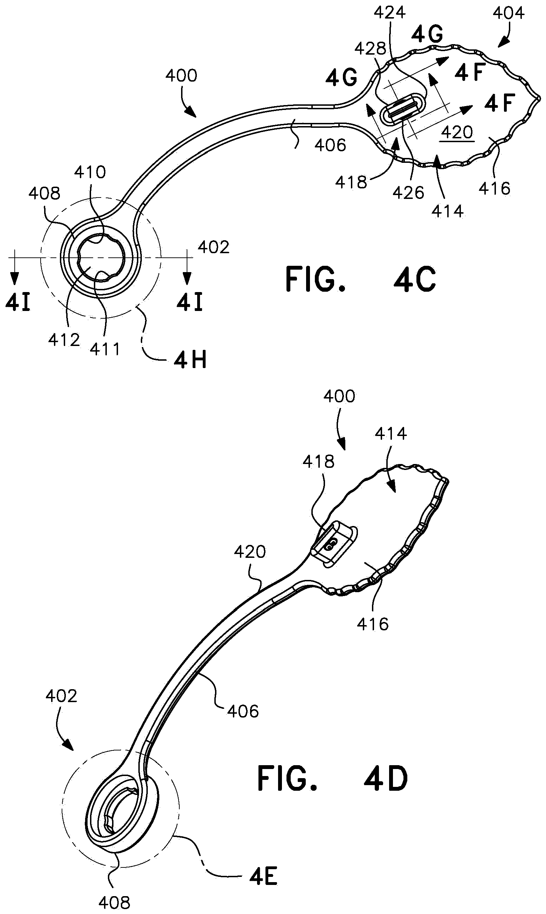

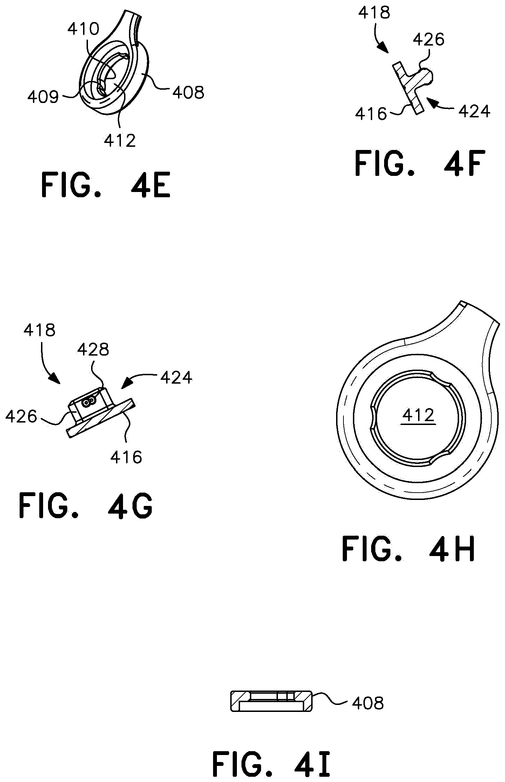

To enable the consumer to select which of the upper and lower feeding ports is to provide birds with access to the interior of the reservoir at any given time, the bird feeder 300 is provided with an adjustable port element, shown in Figures 4 and 4A-4D and generally designated by reference numeral 400. Portions of the adjustable port element 400 are shown in various views in Figures 4E-4I.

The adjustable port element 400 as embodied herein is made to resemble a stem having a leaf at one end and is sometimes referred to herein as a "stem". Other ornamental shapes or designs could be used to provide an adjustable port element as would be understood by persons of ordinary skill in the art.

The stem 400 has a first mounting end generally designated by reference numeral 402 and a second end distal from the first end 402 and generally designated by reference numeral 404. The second end 404 is connected to the first end 402 by an elongated member 406. The first mounting end 402 includes an annular ring 408 having an inner circumference 410 that defines an open center 412. The elongated perch member 318 extends through the open center 412 when the first end 402 of the stem 400 is rotatably mounted thereon. Projecting inwardly from the inner circumference 410 are a plurality of raised points 411 that engage with the outer surface of the elongated perch member. With the raised points 411, the stem 400 is frictionally secured on the perch member while, at the same time, the raised points reduce the surface contact between the annular ring 408 and the perch member, allowing the stem 400 to be readily rotated by the user. The first mounting end 402 is further provided with a generally annular cutout 409 that fits around the flange 333 on the elongated perch member.

The second end 404 of the stem 400 has a blocking structure, generally designated by reference numeral 414. The blocking structure 414 is configured to prevent access to either the upper feed port or the lower feed port by rotating the stem around the mounting end 402, as rotatably secured to the perch, to align the blocking structure 414 with, and cover, the desired feed port. The stem 400 is rotatable between a first upper feed port blocking position in which the blocking structure covers the upper feed port and a second lower feed port blocking position in which the blocking structure covers the lower feed port.

The blocking structure 414 includes a covering member 416 and a locking member generally designated by reference numeral 418 on the inner side 420 of the covering member 416. In the illustrated embodiment, the covering member 416 is generally planar and is provided with an ornamental leaf shape, with an outer side 422 thereof having ornamental leaf texturing. As used herein, the "outer" side 422 is that side of the adjustable port element facing away from the reservoir when the feeder is assembled. The "inner" side 420 is that side of the adjustable port element facing toward the reservoir when the feeder is assembled. The leaf-shaped covering member 416 is sized to both cover the feed ports and provide a pleasing aesthetic. As would be understood, other covering member shapes could alternatively be used.

In the illustrated embodiment, the annular ring 408, elongated member 406 and covering member 416 of the adjustable port element or stem 400 are made from an integral piece of molded material such as high density polyethylene (HDPE) or the like. The locking member 418 is also made integrally with the covering member 416.

The locking member 418 is sized and shaped for insertion into either of the upper or the lower feed ports to secure the locking member to the reservoir side wall and maintain the desired orientation of the stem. The locking member includes an insert generally designated by reference numeral 424, that projects outwardly from the inner side 420 of the covering member 416. At least one side 426 of the insert 424 is provided with at least one raised area or bump 428. The illustrated embodiment has an insert 424 with two bumps 428 on each side 426. The bumps 428 provide a snap fit when the insert 424 is pressed into the feed ports, securing the covering member against the reservoir wall. The resistance to removal provided by the bumps is easily overcome by the user, however, when adjusting the position of the stem 400 relative to the upper and lower feed ports to change the feeding orientation being supported by the feeder.

With the locking member 418 secured to the reservoir side wall in either of the feed ports, the covering member 416 is positioned adjacent to or in abutment with the outer surface of the reservoir side wall to cover the associated feed port and prevent bird access thereto while rotation of the stem is prevented by the locking member. As described, when the stem is in a first upper feed port blocking position, the locking member is inserted into the upper feed port to secure the stem in position so that the covering member covers the upper feed port and birds can access seed only through the lower feed port by hanging upside down from the perch. Conversely, when the stem is in a second lower feed port blocking position, the locking member is inserted into the lower feed port to secure the stem with the covering element positioned over the lower feed port so that birds can access seed only through the upper feed port while standing in an upright position on the same perch.

Accordingly, the present invention has been described with some degree of particularity directed to the exemplary embodiments of the present invention. It should be appreciated, though, that the present invention is defined by the following claims construed in light of the prior art so that modifications or changes may be made to the exemplary embodiments of the present invention.

## Claims

1. A bird feeder (300) including a seed reservoir (302) having a feed port (312) therein through which birds can access seed held within the reservoir, a perch (318) positioned adjacent the feed port and extending outwardly from the reservoir wall (304), and an adjustable port element (400) rotatable with respect to the reservoir wall, wherein said adjustable port element (400) is configured to rotate between a first position in which the port element allows birds to access feed through a feed port only while hanging upside down from the perch, and a second position in which the port element allows birds to access feed while standing in an upright position on the perch, **characterized in that** the perch (318) is fixed with respect to the reservoir wall (304).

2. The bird feeder as set forth in claim 1, wherein said adjustable port element rotates in a plane that is generally parallel with the reservoir wall.

3. The bird feeder as set forth in claim 1, wherein said seed reservoir side wall has at least a first feed port (312) and a second feed port (314) therein through which birds can access seed held within the reservoir, said first and second feed ports being spaced apart and in generally vertical alignment with one another.

4. The bird feeder as set forth in claim 3, wherein the fixed perch extends outwardly from a perch base (316) supported on the reservoir wall, said perch base being between, vertically aligned with, and generally equally spaced away from said first and second feed ports (312, 314).

5. The bird feeder as set forth in claim 4, wherein the adjustable port element (400) includes a mounting end (402) rotatable around said perch and a second end (404) distal from said mounting end, said second end having a blocking structure (414) that prevents access to said first feed port or said second feed port as the adjustable port element is rotated around the perch.

6. The bird feeder as set forth in claim 5, wherein the blocking structure (414) includes a covering member (416) positioned over said feed port to be blocked and a locking member (418) associated with said covering member, said locking member configured to be received into the feed port to be blocked and secured to the reservoir side wall, said locking member when secured within said feed port preventing rotation of said adjustable port element.

7. The bird feeder as set forth in claim 1, wherein a first feed port providing birds with access to seed in the reservoir is above the perch when the adjustable port element is in the first position, and a second feed port providing birds with access to seed in the reservoir is below the perch when the adjustable port element is in the second position, said first feed port and said second feed port being different from one another.

8. The bird feeder as set forth in claim 1, wherein rotating the adjustable port element between said first and second positions requires that the adjustable port element be rotated about 180 degrees.

9. The bird feeder as set forth in claim 1, wherein the adjustable port element (400) includes a mounting end (402) rotatable around said perch and a second end (404) having a blocking structure (414) that prevents access to a feed port positioned adjacent the blocking structure.

10. A bird feeder (300) including a seed reservoir (302) having a feed port (312) therein through which birds can access seed held within the reservoir, a perch (318) positioned adjacent the feed port and extending outwardly from the reservoir wall, and an adjustable port element (400) rotatable with respect to the reservoir wall (304) between a first position in which the port element allows birds to access feed through a feed port only while hanging upside down from the perch, and a second position in which the port element allows birds to access feed while standing in an upright position on the perch,
**characterized in that**,
the adjustable port element (400) includes a mounting end (402) rotatable around said perch and a second end (404) having a blocking structure (414) that prevents access to a feed port positioned adjacent the blocking structure.

11. The bird feeder as set forth in claim 10, wherein the adjustable port element (400) includes a mounting end (402) rotatable around said perch and a second end (404) distal from said mounting end, said second end having a blocking structure (414) that prevents access to said first feed port or said second feed port as the adjustable port element is rotated around the perch.

12. The bird feeder as set forth in claim 11, wherein the blocking structure (414) includes a covering member (416) positioned over said feed port to be blocked and a locking member (418) associated with said covering member, said locking member configured to be received into the feed port to be blocked and secured to the reservoir side wall, said locking member when secured within said feed port preventing rotation of said adjustable port element.

13. The bird feeder as set forth in claim 10, wherein said perch (318) is fixed with respect to the reservoir wall (304).

## Patentansprüche

1. Vogelfutterspender (300), der ein Samenreservoir (302), das eine Fütteröffnung (312) in demselben hat, durch die Vögel auf innerhalb des Reservoirs enthaltene Samen zugreifen können, eine Sitzstange (318), die angrenzend an die Fütteröffnung angeordnet ist und sich von der Reservoirwand (304) nach außen erstreckt, und ein einstellbares Öffnungselement (400), das in Bezug auf die Reservoirwand drehbar ist, einschließt,
wobei das einstellbare Öffnungselement (400) dafür konfiguriert ist, sich zu drehen zwischen einer ersten Stellung, in der das Öffnungselement ermöglicht, dass Vögel durch eine Fütteröffnung, nur auf Futter zugreifen, während sie kopfüber an der Sitzstange hängen, und einer zweiten Stellung, in der das Öffnungselement ermöglicht, dass Vögel auf Futter zugreifen, während sie in einer aufrechten Stellung auf der Sitzstange stehen, **dadurch gekennzeichnet, dass** die Sitzstange (318) in Bezug auf die Reservoirwand (304) unbeweglich ist.

2. Vogelfutterspender nach Anspruch 1, wobei sich das einstellbare Öffnungselement in einer Ebene dreht, die im Allgemeinen parallel zu der Reservoirwand ist.

3. Vogelfutterspender nach Anspruch 1, wobei die Samenreservoir-Seitenwand mindestens eine erste Fütteröffnung, (312) und eine zweite Fütteröffnung, (314) in derselben hat, durch die Vögel auf innerhalb des Reservoirs enthaltene Samen zugreifen können, wobei sich die erste und die zweite Fütteröffnung, voneinander beabstandet und in im Allgemeinen vertikaler Ausrichtung miteinander befinden.

4. Vogelfutterspender nach Anspruch 3, wobei sich die unbewegliche Sitzstange von einer Sitzstangenbasis (316), die an der Reservoirwand getragen wird, nach außen erstreckt, wobei sich die Sitzstangenbasis zwischen der ersten und der zweiten Fütteröffnung, (312, 314), vertikal mit denselben ausgerichtet und im Allgemeinen gleichermaßen von denselben beabstandet befindet.

5. Vogelfutterspender nach Anspruch 4, wobei das einstellbare Öffnungselement (400) ein Anbringungsende (402), das um die Sitzstange drehbar ist, und ein zweites Ende (404), distal von dem Anbringungsende, einschließt, wobei das zweite Ende eine Sperrstruktur (414) hat, die einen Zugang zu der ersten Fütteröffnung oder der zweiten Fütteröffnung, verhindert, wenn das einstellbare Öffnungselement um die Sitzstange gedreht wird.

6. Vogelfutterspender nach Anspruch 5, wobei die Sperrstruktur (414) ein Abdeckelement (416), das über der zu sperrenden Fütteröffnung, angeordnet ist, und ein Verriegelungselement (418), das mit dem Abdeckelement verknüpft ist, einschließt, wobei das Verriegelungselement dafür konfiguriert ist, in der zu sperrenden Fütteröffnung aufgenommen und an der Reservoirseitenwand befestigt zu werden, wobei das Verriegelungselement, wenn es innerhalb der Fütteröffnung, befestigt ist, eine Drehung des einstellbaren Öffiiungselements verhindert.

7. Vogelfutterspender nach Anspruch 1, wobei sich eine erste Fütteröffnung, die Vögel mit Zugang zu Samen in dem Reservoir versieht, oberhalb der Sitzstange befindet, wenn sich das einstellbare Öffnungselement in der ersten Stellung befindet, und sich eine zweite Fütteröffnung, die Vögel mit Zugang zu Samen in dem Reservoir versieht, unterhalb der Sitzstange befindet, wenn sich das einstellbare Öffnungselement in der zweiten Stellung befindet, wobei sich die erste Fütteröffnung und die zweite Fütteröffnung voneinander unterscheiden.

8. Vogelfutterspender nach Anspruch 1, wobei das Drehen des einstellbaren Öffiiungselements zwischen der ersten und der zweiten Stellung erfordert, dass das einstellbare Öffnungselement um 180 Grad gedreht wird.

9. Vogelfutterspender nach Anspruch 1, wobei das einstellbare Öffnungselement (400) ein Anbringungsende (402), das um die Sitzstange drehbar ist, und ein zweites Ende (404), das eine Sperrstruktur (414) hat, die einen Zugang zu einer Fütteröffnung verhindert, die der Sperrstruktur benachbart angeordnet ist, einschließt.

10. Vogelfutterspender (300), der ein Samenreservoir (302), das eine Fütteröffnung (312) in demselben hat, durch die Vögel auf innerhalb des Reservoirs enthaltene Samen zugreifen können, eine Sitzstange (318), die angrenzend an die Fütteröffnung, angeordnet ist und sich von der Reservoirwand nach außen erstreckt, und ein einstellbares Öffnungselement (400), das in Bezug auf die Reservoirwand (304) drehbar ist zwischen einer ersten Stellung, in der das Öffnungselement ermöglicht, dass Vögel durch eine Fütteröffnung, nur auf Futter zugreifen, während sie kopfüber an der Sitzstange hängen, und einer zweiten Stellung, in der das Öffnungselement ermöglicht, dass Vögel auf Futter zugreifen, während sie in einer aufrechten Stellung auf der Sitzstange stehen, einschließt,
**dadurch gekennzeichnet, dass**
das einstellbare Öffnungselement (400) ein Anbringungsende (402), das um die Sitzstange drehbar ist, und ein zweites Ende (404), das eine Sperrstruktur (414) hat, die einen Zugang zu einer Fütteröffnung, verhindert, die der Sperrstruktur benachbart angeordnet ist, einschließt.

11. Vogelfutterspender nach Anspruch 10, wobei das einstellbare Öffnungselement (400) ein Anbringungsende (402), das um die Sitzstange drehbar ist, und ein zweites Ende (404), distal von dem Anbringungsende, einschließt, wobei das zweite Ende eine Sperrstruktur (414) hat, die einen Zugang zu der ersten Fütteröffnung, oder der zweiten Fütteröffnung, verhindert, wenn das einstellbare Öffnungselement um die Sitzstange gedreht wird.

12. Vogelfutterspender nach Anspruch 11, wobei die Sperrstruktur (414) ein Abdeckelement (416), das über der zu sperrenden Fütteröffnung, angeordnet ist, und ein Verriegelungselement (418), das mit dem Abdeckelement verknüpft ist, einschließt, wobei das Verriegelungselement dafür konfiguriert ist, in der zu sperrenden Fütteröffnung aufgenommen und an der Reservoirseitenwand befestigt zu werden, wobei das Verriegelungselement, wenn es innerhalb der Fütteröffnung, befestigt ist, eine Drehung des einstellbaren Öffiiungselements verhindert.

13. Vogelfutterspender nach Anspruch 10, wobei die Sitzstange (318) in Bezug auf die Reservoirwand (304) unbeweglich ist.

## Revendications

1. Mangeoire pour oiseaux (300) comportant un réservoir de graines (302) présentant un orifice d'accès aux graines (312) grâce auquel les oiseaux peuvent accéder aux graines contenues dans le réservoir, un perchoir (318) disposé à proximité de l'orifice d'accès aux graines et ressortant de la paroi du réservoir (304), et un élément d'orifice réglable (400) pouvant tourner par rapport à la paroi du réservoir,
dans laquelle ledit élément d'orifice réglable (400) est configuré pour tourner entre une première position dans laquelle l'élément d'orifice permet aux oiseaux d'accéder à la nourriture par un orifice d'accès aux graines uniquement en étant pendus tête en bas sur le perchoir, et une seconde position dans laquelle l'élément d'orifice permet aux oiseaux d'accéder à la nourriture en étant dans une position tête en haut sur le perchoir, **caractérisée en ce que** le perchoir (318) est fixe par rapport à la paroi du réservoir (304).

2. Mangeoire selon la revendication 1, dans laquelle ledit élément d'orifice réglable tourne dans un plan qui est globalement parallèle à la paroi du réservoir.

3. Mangeoire selon la revendication 1, dans laquelle la paroi latérale dudit réservoir de graines présente au moins un premier orifice d'accès aux graines (312) et un second orifice d'accès aux graines (314) grâce auxquels les oiseaux peuvent accéder aux graines contenues dans le réservoir, lesdits premier et second orifices d'accès aux graines étant espacés l'un de l'autre selon un alignement globalement vertical.

4. Mangeoire selon la revendication 3, dans laquelle le perchoir fixe ressort d'une base de perchoir (316) en étant supporté sur la paroi du réservoir, ladite base de perchoir étant disposée entre lesdits premier et second orifices d'accès aux graines (312, 314) en étant alignée verticalement avec ceux-ci de manière globalement équidistante.

5. Mangeoire selon la revendication 4, dans laquelle l'élément d'orifice réglable (400) comporte une extrémité de montage (402) pouvant tourner autour dudit perchoir et une seconde extrémité (404) distante de ladite extrémité de montage, ladite seconde extrémité présentant une structure de blocage (414) qui empêche l'accès audit premier orifice d'accès aux graines ou audit second orifice d'accès aux graines sous l'effet de la rotation de l'élément d'orifice réglable autour du perchoir.

6. Mangeoire selon la revendication 5, dans laquelle la structure de blocage (414) comporte un élément d'obturation (416) disposé par-dessus ledit orifice d'accès aux graines à bloquer et un élément de verrouillage (418) associé audit élément d'obturation, ledit élément de verrouillage étant configuré pour pénétrer dans l'orifice d'accès aux graines à bloquer et être fixé dans la paroi latérale du réservoir, ledit élément de verrouillage fixé dans ledit orifice d'accès aux graines empêchant la rotation dudit élément d'orifice réglable.

7. Mangeoire selon la revendication 1, dans laquelle un premier orifice d'accès aux graines permettant aux oiseaux d'accéder aux graines du réservoir se trouve au-dessus du perchoir lorsque l'élément d'orifice réglable se trouve dans la première position, et un second orifice d'accès aux graines permettant aux oiseaux d'accéder aux graines du réservoir se trouve au-dessous du perchoir lorsque l'élément d'orifice réglable se trouve dans la seconde position, ledit premier orifice d'accès aux graines et ledit second orifice d'accès aux graines étant différents.

8. Mangeoire selon la revendication 1, dans laquelle la rotation de l'élément d'orifice réglable entre lesdites première et seconde positions demande que l'élément d'orifice réglable subisse une rotation de 180 degrés.

9. Mangeoire selon la revendication 1, dans laquelle l'élément d'orifice réglable (400) comporte une extrémité de montage (402) pouvant tourner autour dudit perchoir et une seconde extrémité (404) présentant une structure de blocage (414) qui empêche l'accès à un orifice d'accès aux graines disposé à proximité de la structure de blocage.

10. Mangeoire pour oiseaux (300) comportant un réservoir de graines (302) présentant un orifice d'accès aux graines (312) grâce auquel les oiseaux peuvent accéder aux graines contenues dans le réservoir, un perchoir (318) disposé à proximité de l'orifice d'accès aux graines et ressortant de la paroi du réservoir, et un élément d'orifice réglable (400) pouvant tourner par rapport à la paroi du réservoir (304) entre une première position dans laquelle l'élément d'orifice permet aux oiseaux d'accéder à la nourriture par un orifice d'accès aux graines uniquement en étant pendus tête en bas sur le perchoir, et une seconde position dans laquelle l'élément d'orifice permet aux oiseaux d'accéder à la nourriture en étant dans une position tête en haut sur le perchoir,
**caractérisée en ce que**
l'élément d'orifice réglable (400) comporte une extrémité de montage (402) pouvant tourner autour dudit perchoir et une seconde extrémité (404) présentant une structure de blocage (414) qui empêche l'accès à un orifice d'accès aux graines disposé à proximité de la structure de blocage.

11. Mangeoire selon la revendication 10, dans laquelle l'élément d'orifice réglable (400) comporte une extrémité de montage (402) pouvant tourner autour dudit perchoir et une seconde extrémité (404) distante de ladite extrémité de montage, ladite seconde extrémité présentant une structure de blocage (414) qui empêche l'accès audit premier orifice d'accès aux graines ou audit second orifice d'accès aux graines sous l'effet de la rotation de l'élément d'orifice réglable autour du perchoir.

12. Mangeoire selon la revendication 11, dans laquelle la structure de blocage (414) comporte un élément d'obturation (416) disposé par-dessus ledit orifice à bloquer et un élément de verrouillage (418) associé audit élément d'obturation, ledit élément de verrouillage étant configuré pour pénétrer dans l'orifice d'accès aux graines à bloquer et être fixé dans la paroi latérale du réservoir, ledit élément de verrouillage fixé dans ledit orifice d'accès aux graines empêchant la rotation dudit élément d'orifice réglable.

13. Mangeoire selon la revendication 10, dans laquelle ledit perchoir (318) est fixe par rapport à la paroi du réservoir (304).
